# EUROPEAN PATENT SPECIFICATION

(11) **EP 1 944 085 B1**
(45) Date of publication and mention of the grant of the patent: **29.02.2012**
(21) Application number: 07118078.0
(22) Date of filing: 09.10.2007
(51) Int. Cl.: B02B 1/08, B02B 3/08, B02B 5/02, B02C 9/04, C12P 7/06

(54) **Method of and apparatus for processing corn grains for production of ethanol**
Verfahren und Vorrichtung zur Maiskörnerverarbeitung für die Herstellung von Ethanol
Procédé et appareil pour le traitement de graines de maïs pour la production d'éthanol

(30) Priority: 13.10.2006 JP 2006280227
(43) Date of publication of application: 16.07.2008
(73) Proprietor: Satake Corporation, Chiyoda-ku, Tokyo 101-0021 (JP)
(72) Inventor: Yokoyama, Ryo, c/o Satake Corporation, Tokyo 101-0021 (JP); Uebayashi, Shigeki, c/o Satake Corporation, Tokyo 101-0021 (JP); Fujioka, Shoji, c/o Satake Corporation, Tokyo 101-0021 (JP)
(74) Representative: Haseltine Lake LLP

(56) References cited:
- JP-A- 4 284 855
- US-A- 2 667 905
- US-A- 3 399 839
- US-A- 3 851 085
- US-A1- 2006 035 354
- US-B2- 6 936 294

## Description

### BACKGROUND OF THE INVENTION

### 1. Field of the Invention

The present invention relates to a method and an apparatus for processing corn grains for production of ethanol.

### 2. Description of the Related Art

Conventionally, methods for processing corn grains for producing ethanol are well known. For example, the methods described in US 2006/0035354 A1 and described in WO 2006/081673 A1 are known.

The invention described in US 2006/0035354 A1 comprises (1) a process of milling the corn grains with an impact miller; (2) a process of separating the milled corn into a first stream consisting of bran and a second stream that includes germ, grits (hereinafter, used as endosperm of corn) and residual bran; (3) a first refining process of refining the second stream consisting of germ, grits and bran; (4) a first separation process of separating and extracting the germ and the grits from the first-refined germ, grits and bran using a sifter; (5) a second refining process of refining an intermediate product consisting of the germ, grits and bran not extracted in the first separation process; and (6) a second separation process of separating and extracting the germ and the grits from the second-refined germ, grits and bran using a sifter.

By this process, wet corn grains are impact-milled and broken into multiple pieces so as to retain the greatest average particle size of the milled fractions, as a result of which the milled germ is selected by particle size, such that, in a stage prior to movement of raw material to an ethanol extraction plant, at least 7% and preferably at least 10% milled germ is extracted from the corn grains, and at least 1%, and preferably at least 2.5% milled bran is extracted from the corn grains. In other words, the process improves the rate of recovery of grits from the corn grains and reduces the impurities/residue (pasty product) created during ethanol production at the ethanol extraction plant, enabling the degree of refinement of ethanol to be improved over conventional processing.

However, in the method described above, in process (1) a single corn grain is broken into multiple small pieces and therefore germ and residual bran are mixed in with the crushed grits. Consequently, in order to supply only milled grits as fuel, the plurality of separation processes described in (2) through (6) are required in order to remove the germ and the residual bran from the grits. Adding this multiplicity of separation processes complicates the production configuration, increases production costs by increasing the cost of production equipment and facilities, and increases running costs by the cost of the electric power that is consumed in the plurality of separation processes.

Moreover, the invention described in WO 2006/081673 A1 comprises (a) tempering a quantity of corn grains; (b) cracking the corn grains; (c) threshing the cracked corn grains; (d) separating the threshed corn grains into a first fraction that is above a threshold size and a second fraction that is below a threshold value size; (e) separating the second fraction into a large grit fraction and a medium grit fraction; (f) separating the large grit fraction by specific gravity into large grits and large germ/pericarp/small-grit mixtures; and (g) separating the medium grit fraction by specific gravity into medium grits, and medium germ/pericarp/small-grit mixtures.

In step (b) described above, a single grain of corn is broken into a plurality of pieces larger than those described in US 2006/0035354 A1, for example, 3-10 pieces. In other words, the 3-10 pieces into which each corn grain is broken are aspirated and the large pericarps are removed, after which, in the step described in (c) above, the remaining pericarp, germ and bran are separated out, thus enabling the rate of recovery of the starch-rich grits to be improved. This process has the advantage of improving product yield in the ethanol production and dry milling processes.

However, simply breaking a single grain of corn into 3-10 pieces means that the pericarp still remains on the plurality of pieces, thus necessitating the follow-on step described in (c) and separating out the pericarp, germ and bran, and further necessitating the plurality of separation processes described in (d) through (g) for separating the pericarp, germ and residual bran from the grits.

Further, in the case of cracking the corn grains without removing the pericarp as described in step (b) above, there often arises a case where the pericarp remains as being adhered to the grits and the germ and the remaining pericarp affects vibration and air-blowing in the separation by the gravity separator to make it difficult to separate the grits and the germ. Thus, it has been necessary to provide a plurality of gravity separators to separate the grits and the germ with high precision.

Some progress is made in the system of US 3399839 (Anderson et al.; Quaker Oats), but further improvement in efficiency is desirable.

The present invention provides a processing method and apparatus for producing ethanol that reduces the number of separation processes to the maximum extent possible and simplifies the production configuration while enabling the grits, pericarp and germ to be extracted with ease.

A method of processing corn grains of the present invention is defined in claim 1. It includes the steps of: tempering the corn grains by adding predetermined amount of moisture to the corn grains such that only pericarps of the corn grains are wetted by the moisture; dehulling the corn grains to remove the wetted pericarps such that the corn grains are not broken with shapes thereof maintained; pulverizing the dehulled corn grains into broken pieces; separating grits and germ from the broken pieces of the corn grains; and milling the separated grits to obtain flour of the corn grains.

A beater-type impact dehuller or a friction-type dehuller is preferably used in the dehulling step. An impact-type miller is preferably used in the milling step. A specific-gravity separator or an optical separator is preferably used in the separating step.

A distinctive feature of the invention is that a primary refining step using an aspirator and a sifter is provided between the dehulling step and the pulverization step, so as to sort the dehulled grains into three grades for further processing.

A secondary refining step using an aspirator and a sifter may be provided between the pulverization step and the specific-gravity separation step.

Further, there may be provided a step of wetting and tempering the dehulled corn grains between the refining step and the pulverization step.

Furthermore, there may be provided a carbon-dioxide processing step of immersing the dehulled corn grains in a pressurized tank, between the primary refining step and the pulverization step, so as to allow carbon dioxide to soak into the dehulled corn grains, after which the dehulled corn grains are removed from the pressurized tank and briefly heat-treated.

An apparatus for processing corn grains of the present invention is defined in claim 10. It includes a tempering device for tempering the corn grains by adding predetermined amount of moisture to the corn grains such that only pericarps of the corn grains are wetted by the moisture; a dehulling device for dehulling the corn grains to remove the wetted pericarps such that the corn grains are not broken with shapes thereof maintained; a pulverizer for pulverizing the dehulled corn grains into broken pieces; a separating device for separating grits and bran from the broken pieces; and a milling device for milling the separated grits, wherein the dehulling device includes a laterally disposed perforated cylinder, a grain supply tube provided at one end of the perforated cylinder, a grain discharge tube provided at another end of the perforated cylinder, a rotary shaft arranged rotatable within the perforated cylinder, and a peeler fixed on the rotary shaft. The dehulling device may further include a screw for feeding corn grains which is fixed on the rotary shaft at the one end of the perforated cylinder in the vicinity of the grain supply tube.

According to the invention, a sifter is further provided for sorting the dehulled grains into three grades for supply to the pulverizer, the separating device and the milling device.

The peeler of the dehulling device may comprise a plurality of support members arranged separately from one another along an axial direction of the rotary shaft, each having a proximal portion fixed to the rotary shaft and arm portions extending radially from the proximal portion toward the perforated cylinder, and beater blades arranged parallel to the rotary shaft and attached to distal ends of the arm portions of the plurality of support members.

In methods of the present invention, after pre-sifted corn grains are tempered in the tempering step they are supplied to the dehulling step. In the dehulling step, the corn grains are not broken apart but are dehulled while retaining their shape. At this time, approximately 98% of the pericarp is peeled off and removed, and therefore, compared to the conventional process in which the corn is crushed after tempering, there is virtually no risk of pieces of the pericarp getting mixed in with the grits. After dehulling, the germ is attached to the grits, and in that state the corn grains are supplied to a succeeding pulverization step. In the pulverization step, the grits are broken into multiple pieces, for example 4-8, and at the same time any attached germ is removed. At this time the germ is in an elastic condition, and therefore can be separated easily from the grits without the germ itself being broken into small pieces. The pulverization of the corn grains with germs not broken is advantageous in that the germs can be collected with their original shapes maintained to improve efficiency of a subsequent refining process of the germs and prevent destroy of enzyme contained in the germs and oxidation and putridity of the germs so that the value-added germs can are provided with valuable elements remained. Next, the mixture of pulverized grits and germ is supplied to a specific-gravity separation step and separated by differences in density into the grits and the germ, with the separated grits then further milled in a milling step and recovered. In other words, according to the present invention, there is virtually no risk of pieces of pericarp getting mixed into the grits, and therefore specific-gravity separation can be completed in one step, thus reducing the separation step to the maximum extent possible and at the same time enabling the grits, the pericarp and the germ to be easily extracted.

### BRIEF DESCRIPTION OF THE DRAWINGS

FIG. 1 is a flow chart illustrating a method for processing corn to produce ethanol according to the present invention;
FIG. 2 is a schematic vertical sectional view of a beater-type impact dehuller; and
FIG. 3 is a sectional view along a line a - a' shown in FIG. 2;
FIG. 4 is a perspective view of a long peeler; and
FIG. 5 is a schematic vertical sectional view of a friction-type dehuller.

### DETAILED DESCRIPTION

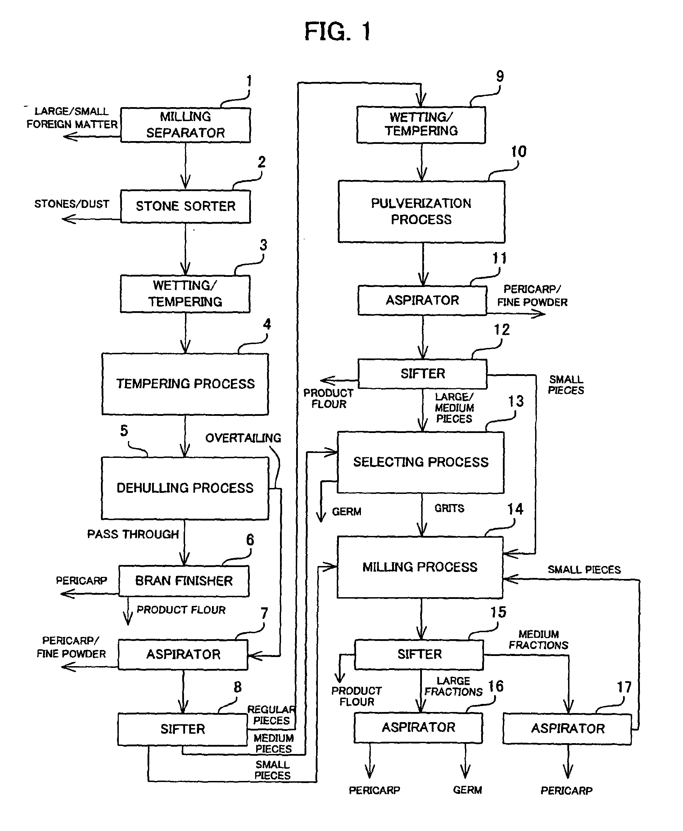

FIG. 1 is a flow chart illustrating a method for processing corn to produce ethanol according to the present invention.

In FIG. 1, material corn grains are first supplied to a sifting process in which impurities and foreign matter are separated and removed. A separator called a milling separator indicated by reference numeral 1 is, for example, one that uses a two-stage sieve comprising an upper sieve consisting of a perforated metal plate with holes approximately 15 mm in diameter and a lower sieve consisting of a perforated metal plate with holes approximately 4 mm in diameter. The two-stage sieve at the upper sieve allows the corn grains to pass through the holes in the sieve but catches and separates overtailing large impurities from the raw material corn grains, whereas at the lower sieve it allows impurities smaller than the corn grains to pass through the sieve but catches and separates the overtailing raw material corn grains, thus enabling both large and small impurities to be separated and removed. Next, the corn grains are supplied to a stone sorter indicated by reference numeral 2, where stones and dust are removed. For the stone sorter, a dry destoner that uses differences in density to separate stones and the like from the corn grains can be used. The sifted corn grains are then supplied to a wetting/tempering process indicated by reference numeral 3. The wetting/tempering process 3 is for adjusting the moisture of the corn grains in order to improve the quality of the flour, and adds enough water to raise the moisture content of the raw material corn grains from approximately 12% to 15-16%, after which the wetted corn grains are tempered for 4-12 hours.

Reference numeral 4 indicates a short tempering process to facilitate removal of the pericarp from the corn grains, in which the corn grains tempered in the wetting/tempering process 3 described above are wetted by moisture of 1%-6% by weight, and tempered for 5-30 minutes. By so doing, the moisture wets only pericarps of the corn grains without penetrating the fibers of the grits of the corn grains, which makes it easy to separate the pericarp from the grits.

Reference numeral 5 indicates a dehulling process that is the essential part of the present invention, in which only the pericarp is removed from the corn grains tempered in the tempering process 4 without breaking up the corn grains tempered in the tempering process 4 while allowing the corn grains to maintain their shape. At this time, approximately 98% of the pericarp is peeled and removed, and the corn grains from which the pericarp has been removed are discharged from the dehulling process in a state in which the germ is attached to the grits.

In the dehulling process 5, the pericarp and small pieces of corn pass through the mesh of the dehuller and are supplied to a bran finisher 6 of a succeeding process. The overtailing corn grains in a state in which the germ is attached to the grits do not pass through the mesh if the dehuller but are caught and supplied to a succeeding process of an aspirator 7.

At the bran finisher 6, the grits attached to the inside of the pericarp are removed and separated from the pericarp to produce flour. At the aspirator 7, the pericarp and fine powder are separated and removed from the dehulled corn grains with a suction-type stream of air and refined. The refined corn grains are then supplied to a succeeding process of a sifter 8, where the dehulled corn grains are separated according to their size into three types of pieces: Regular, medium, and small.

The regular pieces separated by the sifter 8 are in a state in which the germ is attached to the grits, and therefore, after the grains are broken into 4-8 pieces, they are supplied to a pulverization process 10 to separate the grits and the germ. In addition, the medium pieces separated by the sifter 8 are supplied to a separation process 13 to separate the grits and the germ.

In the separation process 13, a specific-gravity separator may be used in which a punched porous steel plate is arranged inclined and moved to vibrate while air is flown from below so as to blow grains having relatively low specific-gravity. Further, an optical separator may be used in which colors and/or shapes of grains are optically discriminated in a continuous flow of the grains and grains to be separated are blown out of the continuous flow by an ejector using a jet of air so as to separate the grits and the germ.

The small pieces separated by the sifter 8 are supplied to a milling process 14 to obtain flour.

It is preferable to provide a wetting/tempering process 9 prior to the pulverization process 10 in order to give the germ attached to the grits elasticity. In the wetting/tempering process 9, the corn grains are wetted and their moisture content increased 2% or less and tempered for 30 minutes or less. This process increases the elasticity of the germ, making it harder for the germ itself to be finely milled in the pulverization process 10 and making it easier to separate the grits and the germ. It should be noted that, as an alternative to the wetting/tempering process 9, a carbon dioxide processing process of immersing the dehulled corn grains in a pressurized tank so as to allow carbon dioxide to soak into the dehulled corn grains, after which the dehulled corn grains are removed from the pressurized tank and briefly heat-treated.

Carbon dioxide is an absorptive gas, and when this property is utilized the gas appears to be absorbed by the large amounts of fat and protein in the grits and the germ. Consequently, when the corn grains are immersed in a pressurized tank or the like and exposed to carbon dioxide under pressure, the cellular connections of the grits and the germ appear to loosen and break. As a result, the degerming of the cellular connection-weakened corn grains can be carried out with considerably ease once the corn grains are returned to atmospheric pressure.

An impact mill or a pin mill, in which the corn grains are impacted and rubbed between a rotating pin and a fixed pin, may be used as the pulverizer used in the above-described pulverization process 10, which removes the germ attached to the grits and at the same time breaks the grits into multiple pieces, for example, 4-8 pieces.

Next, the corn grains, which now consist of a mixture of germ and grits pulverized into 4-8 pieces, are supplied to an aspirator 11, where the pericarp and fine powder are separated and removed from the dehulled corn grains with a suction-type stream of air and the mixture refined, and further, the refined corn grains are supplied to a sifter 12 and separated by size into three types of pieces: Small pieces, medium/large pieces, and flour. The overtailing medium/large pieces are caught by the sifter 12 and supplied to a specific-gravity separation process 13 together with the medium pieces discharged from the sifter 8 described above, the grits and the germ are separated by specific gravity, and the small pieces that pass through the sifter 12 are supplied to a milling process 14 together with the small pieces discharged from the sifter 8 described above without going through the specific-gravity separation process 13 and are milled into flour.

A rollermill is preferable for the milling machine in the milling process 14. The milled product milled in the milling process 14 is supplied to a succeeding process of a sifter 15 and separated into three types: Large fractions, medium fractions and product flour (small fraction). The large fractions, which overtail the sifter 15, are supplied to an aspirator 16 and the pericarp and the germ are separated by a suction-type stream of air, whereas the medium fractions, which pass through the sifter 15, are supplied to an aspirator 17 and are separated into pericarp and small pieces by a suction-type stream of air. Then, the small pieces separated out by the aspirator 17 are returned to the milling process 14 and the milling/separation operation is repeated. The small fractions, i.e. particles of grits passed through the sifter 15 are taken out as product flour.

Thus, as described above, because the tempered corn grains in the dehulling process 5 are dehulled while maintaining their shape without breaking apart the corn grains, approximately 98% of the pericarp is peeled off and removed, and therefore, compared to the conventional process in which the tempered corn grains are crushed, there is virtually no risk of the pericarp getting mixed in with the grits. Moreover, the dehulled corn grains are in a state in which the germ is attached to the grits, and in that state supplied to the succeeding pulverization process 10. In the pulverization process 10 the grits are pulverized into 4-8 small pieces, and at the same time, the attached germ is removed. At this time, the germ is elastic, and therefore is removed from the grits without the germ itself being broken into smaller pieces. Then, the mixture of germ and grits, the latter having now been broken into 4-8 small pieces each, is supplied to the specific-gravity separation process 13, where the grits and the germ are separated by their difference in density. The separated grits are then supplied to the milling process 14, milled, and recovered. In other words, according to the present invention, there is virtually no risk of pieces of pericarp getting mixed into the grits, and therefore the specific-gravity separation process 13 can be completed in one process, thus reducing the separation process to the maximum extent possible and at the same time enabling the grits, the pericarp and the germ to be easily extracted.

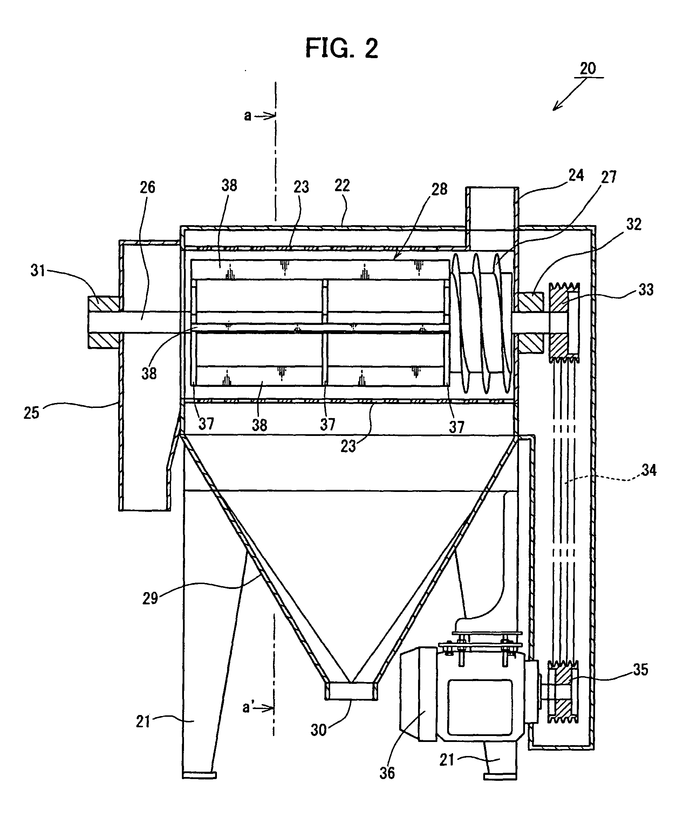

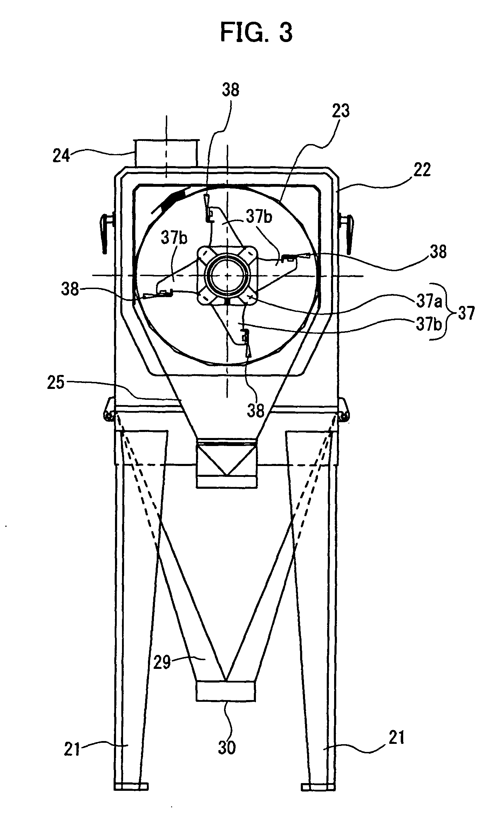

A description is now given of the dehuller used in the dehulling process of the present invention. FIG. 2 is a schematic vertical sectional view of a beater-type impact dehuller. FIG. 3 is a sectional view along a line a - a' shown in FIG. 2.

In FIG. 2 and FIG. 3, the impact-type dehuller 20 is comprised mainly of a perforated cylinder 23 disposed laterally within a frame 22 mounted on a stand 21, a grain supply tube 24 provided on one end side of the perforated cylinder 23, a grain discharge tube 25 provided on the other end side of the perforated cylinder 23, a rotary shaft 26 arranged to be rotatable within the perforated cylinder 23, a grain transport screw 27 fixed to the rotary shaft 26 in the vicinity of the grain supply tube 25, and a peeler 28 arranged within the perforated cylinder 23.

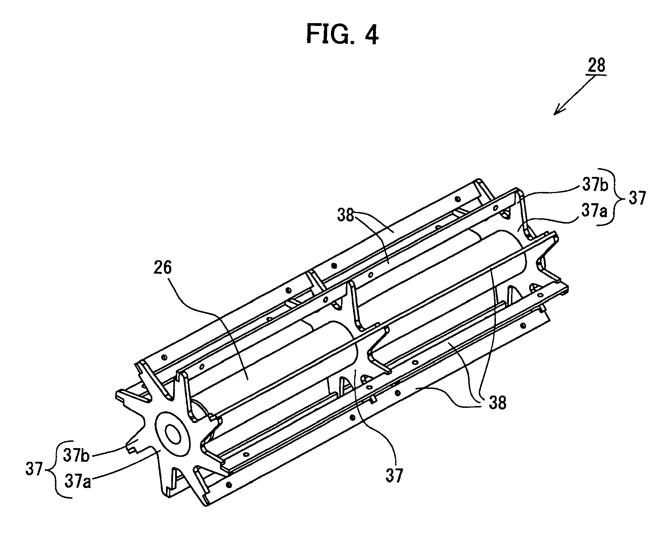

With the impact-type dehuller 20 shown in FIG. 2 the grain transport screw 27 is mounted on the rotary shaft 26. However, when using a long peeler 28 like that shown in FIG. 4, the grain transport screw 27 can be eliminated.

Reference numeral 29 indicates a pericarp collection hopper provided beneath the perforated cylinder 23. A pericarp discharge port 30 is provided at the bottom end of the pericarp collection hopper 29. Reference numerals 31, 32 indicate shaft bearings provided exterior to the frame 22 that rotatably support the rotary shaft 26. A V-pulley 33 is fixed to one end of the rotary shaft 26, and is rotatably driven by a motor 36 mounted on the bottom of the stand 21 through a V-belt 34 and a motor pulley 35. The rotary shaft 26 is set to rotate at a speed of 800-1000 rpm.

The peeler 28 is comprised of a plurality of support members 37 provided in an axial direction of the rotary shaft 26 (in FIG. 2 there are three support members 37) each having a proximal portion 37a fixed on the rotary shaft 26 and multiple arm portions 37b ... that extend radially from the proximal portion 37a toward the perforated cylinder 23 (in FIG. 3 there are four arm portions 37b), as well as long beater blades 38 ... disposed parallel to the rotary shaft mounted on tip ends of the arm portions 37b of the plurality of support members 37.

In the embodiment shown in FIG. 2 and FIG. 3, four long beater blades 38 ... are shown, whereas in the embodiment shown in FIG. 4, eight long beater blades 38 ... are shown.

In the impact-type dehuller 20 of the present embodiment, when the tempered corn grains are supplied from the grain supply tube 24 they are moved into the perforated cylinder 23 by the action of the screw 27. Inside the perforated cylinder 23, as the volume of corn grains reaches 20-40% of capacity they are struck by the beater blades 38 ... so that the pericarp on the surface of the corn grains is peeled off by the impact of the corn grains striking each other and by the friction of being pressed against the inner wall of the perforated cylinder 23. At this point the corn grains are dehulled by the rotation of the long beater blades 38 ..., and therefore, because they are dehulled while retaining their shape without being broken up, approximately 98% of the pericarp is peeled off and removed. The corn grains are then gradually moved toward the grain discharge tube 25 side and ultimately discharged to the exterior of the machine from the grain discharge tube 25.

The pericarp and milled fine powder created at this point are discharged to the exterior of the perforated cylinder 23 and discharged to the exterior of the machine through the pericarp collection hopper 29 and the pericarp discharge port 30.

It should be noted that although in the impact-type dehuller 20 of the present embodiment there is no stopper plate or lid provided on the discharge side of the perforated cylinder 23 or the rim of the grain discharge tube 25 opening, such may be provided when the amount of corn grains in the perforated cylinder 23 does not reach 20-40% of capacity. In addition, the amount of corn grains in the perforated cylinder 23 may be adjusted by adjusting the rotary shaft 26 rpm and the corn grains volume supply.

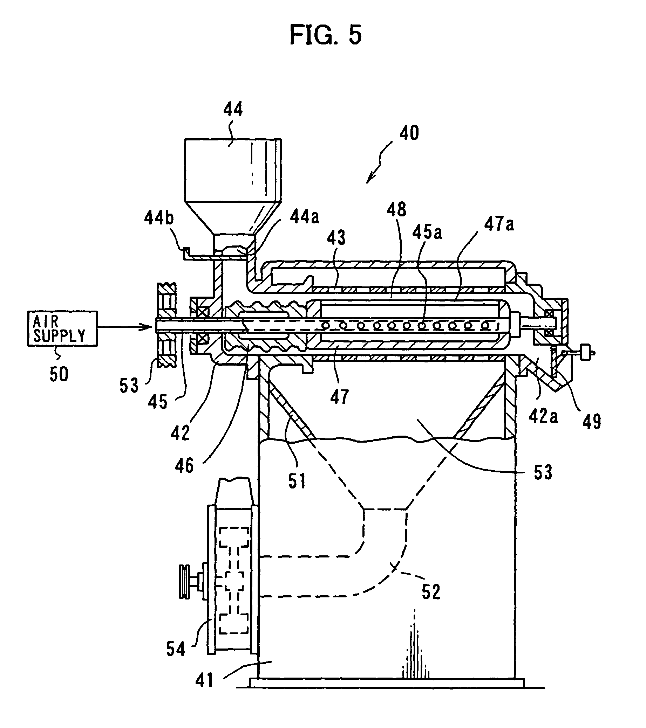

Alternative to beater-type impact dehuller, a friction-type dehuller as shown in FIG. 5 may be used in the dehulling process. The friction-type dehuller performs dehulling by utilizing a friction-type polisher having a blowing-friction polishing roller arranged rotatable in a porous polishing cylinder for removing bran.

In FIG. 5, a friction-type dehuller 40 comprises a perforated cylinder 43 disposed laterally within a frame 42 mounted on a stand 41, a grain supply tank 44 having a shutter 44b and a supply port 44a provided on one end side of the perforated cylinder 43, a grain outlet 42a provided on the other end side of the perforated cylinder 43, a hollow rotary shaft 45 arranged to be rotatable within the perforated cylinder 43, a grain transport screw 46 fixed to the hollow rotary shaft 45 under the supply port 44a of the grain supply tank 44, and a friction roller 47 arranged within the perforated cylinder 43.

A pericarp collection hopper 51 is provided beneath the perforated cylinder 43. A pericarp discharge tube 52 is provided at the bottom end of the pericarp collection hopper 51. A pulley 53 is fixed to one end of the hollow rotary shaft 45, and is rotatably driven by a motor (not shown) mounted on the bottom of the stand 41 through a belt and a motor pulley. A resistant lid 49 is provided at the grain outlet 42a for adjusting the amount of corn grains in the perforated cylinder 43. The other end of the hollow rotary shaft 45 is connected to an air supply 50 so that air is supplied into a peeling chamber 48 between the friction roller 47 and the perforated cylinder 43 through air holes 45a formed on the hollow shaft 45 and blow openings 47a formed in the friction roller 47.

In the friction-type dehuller 40, when the tempered corn grains are supplied from the supply port 44a of the grain supply tank 44 the grains are moved into the perforated cylinder 43 by the action of the screw 46. Inside the perforated cylinder 43, the corn grains are scraped by the friction roller 47 so that the pericarp on the surface of the grains is peeled off by the friction of the corn grains and by the friction of being pressed against the inner wall of the perforated cylinder 43. At this point the corn grains are dehulled while retaining their shape without being broken up. The corn grains are then gradually moved toward the grain outlet 42a and ultimately discharged to the exterior of the machine from the grain outlet 42a.

The pericarp and milled fine powder created in the peeling are discharged to the exterior of the perforated cylinder 43 and discharged to the exterior of the machine through the pericarp collection hopper 51 and the pericarp discharge tube 52 by the suction of a fan 54. The air supplied into the peeling chamber 48 from the blow openings 47a facilitates discharge of the pericarp and milled fine powder to the exterior of the perforated cylinder 43.

## Claims

1. A method of processing corn grains for production of ethanol, comprising the steps of:
tempering the corn grains by adding a predetermined amount of moisture to the corn grains such that only pericarps of the corn grains are wetted by the moisture;
dehulling the corn grains to remove the wetted pericarps so that the corn grains are not broken but their shapes are maintained;
pulverizing the dehulled corn grains into broken pieces;
separating grits and germ from the broken pieces of the corn grains; and
milling the separated grits to obtain flour of the corn grains;
**characterised by** a primary refining step (7, 8) using an aspirator and a sifter, after the dehulling step, to separate the dehulled corn grains into regular pieces, medium pieces, and small pieces, wherein the regular pieces are supplied to the pulverizing step, the medium pieces are supplied to the following separating step, and small pieces are supplied to the following milling step.

2. A method according to claim 1, wherein a beater-type impact dehuller is used in said dehulling step.

3. A method according to claim 1, wherein a friction-type dehuller is used in said dehulling step.

4. A method according to claim 1, wherein an impact-type miller is used in said milling step.

5. A method according to claim 1, wherein a specific-gravity separator is used in said separating step.

6. A method according to claim 1, wherein an optical separator is used in said separating step.

7. A method according to any preceding claim, further comprising a secondary refining step (11, 12) using an aspirator and a sifter between said pulverization step and said specific-gravity separation step.

8. A method according to any preceding claim, further comprising a step (9) of wetting and tempering the dehulled corn grains between said refining step and said pulverization step.

9. A method according to any preceding claim, further comprising a carbon-dioxide processing step of immersing the dehulled corn grains in a pressurized tank, between said primary refining step and said pulverization step, so as to allow carbon dioxide to soak into the dehulled corn grains, after which the dehulled corn grains are removed from the pressurized tank and briefly heat-treated.

10. An apparatus for processing corn grains for production of ethanol, comprising:
a tempering device for tempering the corn grains by adding a predetermined amount of moisture to the corn grains such that only pericarps of the corn grains are wetted by the moisture;
a dehulling device (20; 40) for dehulling the corn grains to remove the wetted pericarps so that the corn grains are not broken but their shapes are maintained;
a pulverizer for pulverizing the dehulled corn grains into broken pieces;
a separating device for separating grits and bran from the broken pieces; and
a milling device for milling the separated grits,
wherein said dehulling device includes a laterally disposed perforated cylinder (23), a grain supply tube (24) provided at one end of said perforated cylinder, a grain discharge tube (25) provided at another end of said perforated cylinder, a rotary shaft (76) arranged within said perforated cylinder, and a peeler (28) fixed on said rotary shaft;
**characterised by** the further provision of an aspirator (7) and a sifter (8) for separating the dehulled corn grains into regular pieces, medium pieces and small pieces, wherein the regular pieces are supplied to the pulverizer, the medium pieces are supplied to the separating device, and the small pieces are supplied to the milling device.

11. An apparatus according to claim 10, wherein the peeler of the dehulling device comprises a plurality of support members (37) arranged separately from one another along the axial direction of said rotary shaft, each having a proximal portion (37a) fixed to said rotary shaft and arm portions (37b) extending radially from said proximal portion toward said perforated cylinder, and beater blades (38) arranged parallel to said rotary shaft and attached to distal ends of said arm portions of said plurality of support members.

## Patentansprüche

1. Verfahren zur Maiskörnerverarbeitung für die Herstellung von Ethanol, umfassend die Schritte:
Tempern der Maiskörner durch Zugeben einer bestimmten Menge Feuchtigkeit zu den Maiskörnern, so dass nur die Perikarpe der Maiskörner durch die Feuchtigkeit benetzt werden;
Schälen der Maiskörner zur Entfernung der benetzten Perikarpe, so dass die Maiskörner nicht aufgebrochen werden, aber ihre Formen beibehalten werden;
Zerkleinern der geschälten Maiskörner zu Bruchstücken;
Trennen von Grits und Keim aus den Bruchstücken der Maiskörner; und
Mahlen der getrennten Grits zur Gewinnung von Mehl aus den Maiskörnern;
**gekennzeichnet durch** einen ersten Veredelungsschritt (7, 8) mit einer Saugvorrichtung und einem Sieb nach dem Schälschritt, wodurch die geschälten Maiskörner in normale Stücke, mittlere Stücke und kleine Stücke aufgetrennt werden, wobei die normalen Stücke in den Zerkleinerungsschritt überführt werden, die mittleren Stücke in den nachfolgenden Trennschritt überführt werden und die kleinen Stücke in den nachfolgenden Mahlschritt überführt werden.

2. Verfahren nach Anspruch 1, wobei ein Schlag-Prallschäler in dem Schälschritt verwendet wird.

3. Verfahren nach Anspruch 1, wobei ein Reibungs-Schäler in dem Schälschritt verwendet wird.

4. Verfahren nach Anspruch 1, wobei eine Prallmühle in dem Mahlschritt verwendet wird.

5. Verfahren nach Anspruch 1, wobei ein Schwerteilabscheider in dem Trennschritt verwendet wird.

6. Verfahren nach Anspruch 1, wobei ein optischer Abscheider in dem Trennschritt verwendet wird.

7. Verfahren nach einem vorhergehenden Anspruch, zudem umfassend einen zweiten Veredelungsschritt (11, 12) mit einer Saugvorrichtung und einem Sieb zwischen dem Zerkleinerungsschritt und dem Schwerteil-Trennschritt.

8. Verfahren nach einem vorhergehenden Anspruch, zudem umfassend einen Schritt (9) Benetzen und Tempern der geschälten Maiskörner zwischen dem Veredelungsschritt und dem Zerkleinerungsschritt.

9. Verfahren nach einem vorhergehenden Anspruch, zudem umfassend einen Kohlendioxid-Verarbeitungsschritt, bei dem die geschälten Maiskörner zwischen dem ersten Veredelungsschritt und dem Zerkleinerungsschritt in einen Druckbehälter getaucht werden, so dass Kohlendioxid in die geschälten Maiskörner eindringen kann, wonach die geschälten Maiskörner aus dem Druckbehälter entfernt werden und kurz wärmebehandelt werden.

10. Vorrichtung zur Verarbeitung von Maiskörnern für die Herstellung von Ethanol, umfassend:
eine Temper-Vorrichtung zum Tempern der Maiskörner durch Zugabe einer bestimmten Menge Feuchtigkeit zu den Maiskörnern, so dass nur die Perikarpe der Maiskörner durch die Feuchtigkeit benetzt werden;
eine Schälvorrichtung (20; 40) zum Schälen der Maiskörner, damit die benetzten Perikarpe entfernt werden und so die Maiskörner nicht aufgebrochen werden, aber ihre Formen bewahrt bleiben;
eine Zerkleinerungsvorrichtung zum Zerkleinern der geschälten Maiskörner zu Bruchstücken;
eine Trennvorrichtung zum Trennen von Grits und Kleie aus den Bruchstücken; und
eine Mahlvorrichtung zum Mahlen der getrennten Grits,
wobei die Schälvorrichtung einen seitlich angeordneten Lochzylinder (23), ein an einem Ende des Lochzylinders befindliches Korn-Beschickungsrohr (24), ein am anderen Ende des Lochzylinders befindliches Korn-Austragsrohr (25), eine in dem Lochzylinder angeordnete Drehwelle (76), und einen auf der Drehwelle befestigten Schäler (28) aufweist;
**gekennzeichnet durch** die weitere Bereitstellung einer Saugvorrichtung (7) und eines Siebes (8) zum Trennen der geschälten Maiskörner in normale Stücke, mittlere Stücke und kleine Stücke, wobei die normalen Stücke in die Zerkleinerungsvorrichtung überführt werden, die mittleren Stücke in die Trennvorrichtung überführt werden und die kleinen Stücke in die Mahlvorrichtung überführt werden.

11. Verfahren nach Anspruch 10, wobei der Schäler der Schälvorrichtung eine Anzahl von Haltebauteilen (37), die getrennt voneinander in Achsrichtung der Drehwelle angeordnet sind, und die jeweils einen an der Drehwelle befestigten proximalen Teil (37a) und Armteile (37b) aufweisen, die sich radial von dem proximalen Teil zu dem Lochzylinder erstrecken, sowie Schlagklingen (38) umfasst, die parallel zur Drehwelle angeordnet sind und an den distalen Enden der Armteile der Anzahl Haltebauteile befestigt sind.

## Revendications

1. Procédé de traitement de graines de maïs pour la production d'éthanol, comprenant les étapes de:
mettre à température les graines de maïs en ajoutant une quantité prédéterminée d'humidité aux graines de maïs de telle sorte que seulement les péricarpes des graines de maïs sont mouillées par l'humidité;
décortiquer les graines de maïs pour retirer les péricarpes mouillées de sorte que les graines de maïs ne sont pas cassées, mais leurs formes sont maintenues;
pulvériser les graines de maïs décortiquées en pièces cassées;
séparer les grittes et germes des pièces cassées des graines de maïs; et
broyer les grittes séparées pour obtenir de la farine des graines de maïs;
**caractérisé par** une étape de raffinage primaire (7, 8) utilisant un aspirateur et un tamis, après l'étape de décorticage, pour séparer les graines de maïs décortiquées en pièces régulières, pièces moyennes, et petites pièces, où les pièces régulières sont amenées à l'état de pulvérisation, les pièces moyennes sont amenées à l'étape de séparation suivante et les petites pièces sont amenées à l'étape de broyage suivante.

2. Procédé selon la revendication 1, dans lequel un décortiqueur à impact du type batteur est utilisé dans ladite étape de décorticage.

3. Procédé selon la revendication 1, dans lequel un décortiqueur du type à friction est utilisé dans ladite étape de décorticage.

4. Procédé selon la revendication 1, dans lequel un broyeur du type à impact est utilisé dans ladite étape de broyage.

5. Procédé selon la revendication 1, dans lequel un séparateur à gravité spécifique est utilisé dans ladite étape de séparation.

6. Procédé selon la revendication 1, dans lequel un séparateur optique est utilisé dans ladite étape de séparation.

7. Procédé selon l'une quelconque des revendications précédentes, comprenant en outre une étape de raffinage secondaire (11, 12) utilisant un aspirateur et un tamis entre ladite étape de pulvérisation et ladite étape de séparation à gravité spécifique.

8. Procédé selon l'une quelconque des revendications précédentes, comprenant en outre une étape (9) consistant à mouiller et à mettre à température lesdites graines de maïs décortiquées entre ladite étape de raffinage et ladite étape de pulvérisation.

9. Procédé selon l'une quelconque des revendications précédentes, comprenant en outre une étape de traitement au dioxyde de carbone consistant à immerger les graines de maïs décortiquées dans une cuve sous pression, entre ladite étape de raffinage primaire et ladite étape de pulvérisation de façon à permettre audit dioxyde de carbone de rentrer dans lesdites graines de maïs décortiquées, après quoi les graines de maïs décortiquées sont retirées de la cuve sous pression et sont brièvement traitées par la chaleur.

10. Appareil pour le traitement de graines de maïs pour la production d'éthanol, comprenant:
un dispositif de mise à température pour mettre à température les graines de maïs en ajoutant une quantité prédéterminée d'humidité aux graines de maïs de sorte que seulement les péricarpes des graines de maïs sont mouillées par l'humidité;
un dispositif de décorticage (20; 40) pour décortiquer les graines de maïs afin de retirer les péricarpes mouillées de sorte que les graines de maïs ne sont pas cassées, mais leurs formes sont maintenues,
un pulvérisateur pour pulvériser les graines de maïs décortiquées en pièces cassées;
un dispositif de séparation pour séparer les grittes et le son des pièces cassées; et
un dispositif de broyage pour broyer les grittes séparées,
où ledit dispositif de décorticage comprend un cylindre perforé disposé latéralement (23), un tube d'amenée de graines (24) réalisé à une extrémité dudit cylindre perforé, un tube d'évacuation des graines (25) prévu à l'autre extrémité dudit cylindre perforé, un arbre de rotation (76) agencé dans ledit cylindre perforé et une péleuse (28) fixée sur ledit arbre de rotation;
**caractérisé en outre par** la réalisation d'un aspirateur (7) et d'un tamis (8) pour séparer les graines de maïs décortiquées en pièces régulières, pièces moyennes et petites pièces, où les pièces régulières sont amenées au pulvérisateur, les pièces moyennes sont amenées au dispositif de séparation, et les petites pièces sont amenées au dispositif de broyage.

11. Appareil selon la revendication 10, dans lequel la péleuse du dispositif de décorticage comprend une pluralité d'éléments de support (37) agencés séparément les uns des autres dans la direction axiale dudit arbre de rotation, chacun ayant une portion proximale (37a) fixée audit arbre de rotation et des portions de bras (37b) s'étendant radialement de ladite portion proximale vers ledit cylindre perforé, et des lames de battage (38) agencées parallèlement audit arbre de rotation et fixées aux extrémités distales desdites portions de ladite pluralité d'éléments de support.
